# EUROPÄISCHE PATENTSCHRIFT

(11) **EP 1 928 951 B1**
(45) Veröffentlichungstag und Bekanntmachung des Hinweises auf die Patenterteilung: **08.01.2014**
(21) Anmeldenummer: 06793085.9
(22) Anmeldetag: 31.08.2006
(51) Int. Cl.: C08L 23/28, C08L 23/22, C08K 3/04

(54) **KAUTSCHUKMISCHUNG FÜR INNERLINER VON FAHRZEUGLUFTREIFEN**
RUBBER MIXTURE FOR INNER LINER OF PNEUMATIC VEHICLE TYRES
MELANGE DE CAOUTCHOUC DESTINE AUX GOMMES INTERIEURES DE PNEUMATIQUES DE VEHICULES

(30) Priorität: 21.09.2005 DE 102005044999
(43) Veröffentlichungstag der Anmeldung: 11.06.2008
(73) Patentinhaber: Continental Reifen Deutschland GmbH, 30165 Hannover (DE)
(72) Erfinder: KLEFFMANN, Jens, 30165 Hannover (DE)
(74) Vertreter: Finger, Karsten
(86) Internationale Anmeldenummer: PCT/EP2006/065841
(87) Internationale Veröffentlichungsnummer: WO 2007/033893

(56) Entgegenhaltungen:
- EP-A2- 0 102 844
- EP-A2- 0 296 332
- DATABASE WPI Week 198038 Derwent Publications Ltd., London, GB; AN 1980-66777C XP002402844 & JP 55 102669 A (SHOWA ELECTRIC WIRE CO LTD) 6. August 1980 (1980-08-06)

## Beschreibung

Die Erfindung betrifft eine Kautschukmischung, insbesondere für den Innerliner von Fahrzeugluftreifen. Ferner betrifft die Erfindung einen Fahrzeugluftreifen mit einem Innerliner, der auf einer solchen Kautschukmischung basiert.

In schlauchlosen Fahrzeugluftreifen sorgt ein möglichst luftundurchlässiger, radial innen angeordneter Innerliner, auch Innenseele oder Innenplatte genannt, dafür, dass die in den Reifen eingepumpte Luft nicht entweicht. Dem Entweichen der Luft muss entgegengewirkt werden, da das Entweichen zu einem Minderdruck in Reifen führt, der die Haltbarkeit des Reifens stark beeinträchtigt. Ferner schützt der Innerliner die Karkasse vor dem Eindiffundieren von Luft und Feuchtigkeit, denn durch Luft und Feuchtigkeit können die Festigkeitsträger der Karkasse und/oder des Gürtels Schaden nehmen. Damit der Innerliner luftdicht bleibt, muss er auch eine gute Riss- und Ermüdungsbeständigkeit aufweisen, damit im Fahrbetrieb keine Risse entstehen, die die Luftdichtigkeit beeinträchtigen.

Als Kautschuke für den Innerliner werden üblicherweise Butylkautschuk, Chlorbutylkautschuk oder Brombutylkautschuk, gelegentlich im Verschnitt mit anderen Dienkautschuken; eingesetzt. Butyl- und Halobutylkautschuke weisen eine geringe Gasdurchlässigkeit auf. Der Verschnitt von Butyl- und Halobutylkautschuk mit Kautschuken, ausgewählt aus der Gruppe, bestehend aus Polybutadien, Styrol-Butadien-Copolymer, 3,4-Polyisopren, cis-1,4-Polyisopren, Naturkautschuk, Styrol-Isopren-Copolymer und Styrol-Isopren-Butadien-Terpolymer, erfolgt aus Gründen der Erhöhung der Konfektionsklebrigkeit, der Kostenreduzierung und der Verbesserung der mechanischen Eigenschaften.

Durch die Zudosierung von voluminösen wenig bzw. nicht aktiven Füllstoffen kann die Luftdichtigkeit von Mischungen auf der Basis von Butyl- oder Halobutylkautschuk weiter erhöht werden. Zu diesen Füllstoffen zählen z. B. Ruß des Typs N 660 und Kreide. Da Innerliner aber, um bei dynamischen Beanspruchungen Rissbildungen zu verhindern, einen niedrigen Elastizitätsmodul und eine geringe Härte aufweisen sollten, dies aber im Widerspruch zu einem hohen Anteil an nicht aktiven Füllstoffen steht, werden der Kautschukmischung in der Regel Mineralölweichmacher zugesetzt, die den Elastizitätsmodul und die Härte der Mischung reduzieren, aber auch gleichzeitig die Gasdurchlässigkeit wieder erhöhen, woraus sich ein enger, optimaler Bereich für die eingesetzten Mineralölweichmacher- und Füllstoffmengen ergibt.

Zur Reduzierung der Gasdurchlässigkeit wird in der EP 0 296 332 A2 eine Kautschukmischung für Innerliner vorgeschlagen, die einen Halobutylkautschuk, 3 bis 20 Gewichtsteile eines α-Methylstyrol-Homopolymers mit einem Erweichungspunkt zwischen 93 und 150 °C und einer Glasübergangstemperatur von 15 bis 75 °C und 30 bis 90 Gewichtsteile Ruß enthält.

Die Mineralölweichmacher können im Verlauf der Reifenfertigung, z. B. bei der Vulkanisation, und der Lagerung und dein Gebrauch teilweise aus dem Innerliner in anderer, z. T. haltbarkeitskritische Reifenbauteile diffundieren. Dadurch versprödet der Innerliner mit dem möglichen Resultat der Rissbildung. Außerdem werden die Bauteile, in die der Mineralölweichmacher diffundiert, durch den eindiffundierten Weichmacher in ihrem Elastizitätsmodul und in ihrer Härte reduziert. Sind vom Eindiffundieren Bauteile betroffen, die nicht einer dehnungskonstanten, sondern einer energie- oder kraftkonstanten Verformung unterliegen, z. B. die Wulswerstärkergummierung, kann es infolge der Spannungs-/Dehnungskonzentration in den erweichten Bauteilen zu einer signifikanten Schwächung mit Rissbildung in diesem Bauteilen kommen.
Auch die Verwendung von so genanntem Auswuchtpulver kann dazu führen, dass dem Innerliner Weichmacher entzogen wird und er versprödet.

In der GB 787068 werden verbesserte Kautschukmischungen für Innerliner von Fahrzeugluftreifen beschrieben, die Polyisobutylen mit einem mittleren Molekulargewicht von zumindest 80000 g/mol und ein weiteres Elastomer, ausgewählt aus Naturkautschuk oder Styrol-Butadien-Copolymer, enthalten. Polyisobutylen und das andere Elastomer liegen im Verhältnis von 50 bis 70 % Polyisobutylen und entsprechend von 50 bis 30 % anderen Elastomers vor. Der Einsatz dieser hohen Mengen an Polyisobutylen, welches an der Vernetzung nicht teilnimmt, führt zu einem schlechten Druckverformungsrest.

Die Firma ExxonMobil Chemical vertreibt Polyisobutylen unter dem Namen Vistanex^{®} für Kautschukmischungen auf der Basis von Naturkautschuk oder Styrol-Butadien-Copolymer, die sich durch ein verbessertes Wärmealterungsverhalten, bessere Rissbeständigkeit, verbesserte elektrische Eigenschaften, reduzierte Absorption von Wasser und verringerte Gasdurchlässigkeit auszeichnen sollen. Gleichzeitig wird bei diesen Mischungen die Zugfestigkeit und die Dehnung bis zum Bruch reduziert.

Hochmolekulares Polyisobutylen wird z. B. in Isolierklebebänder für Kabelisolierungen eingesetzt. Dies ist beispielswiese in der JP 55102669 A offenbart.

Der vorliegenden Erfindung liegt die Aufgabe zugrunde, Kautschukmischungen, insbesondere für den Innerliner von Fahrzeugluftreifen, bereitzustellen, deren Vulkanisate sich durch eine reduzierte Weichmacherdiffusion und gute Druck- und Zugeigenschaften auszeichnen.

Gelöst wird diese Aufgabe erfindungsgemäß dadurch, dass die Kautschukmischung
a) 50 - 100 Gewichtsteile zumindest eines Halobutylkautschukes,
b) bis maximal 50 Gewichtsteile zumindest eines weiteren Kautschukes, ausgewählt aus der Gruppe, bestehend aus Butylkautschuk, Polybutadien, Styrol-Butadien-Copolymer, 3,4-Polyisopren, cis-1,4-Polyisopren, Naturkautschuk, Styrol-Isopren-Copolymer und Styrol-Isopren-Butadien-Terpolymer, wobei sich die Gewichtsteile von a) und b) zu 100 addieren,
c) 5 - 45 Gewichtsteile, bezogen auf 100 Gewichtsteile a) und b), zumindest eines Polyisobutylens mit einem Gewichtsmittel-Molgewicht M_{w} von mehr als 400000 g/mol und
d) 10 - 120 Gewichtsteile, bezogen auf 100 Gewichtsteile a) und b), zumindest eines Rußes
enthält.

Die 5 bis 45 Gewichtsteile eines Polyisobutylens mit einem Gewichtsmittel-Molgewicht M_{w} von mehr als 400000 g/mol wirken in einer Ruß aufweisenden Mischung, die 50 bis 100 Gewichtsteile eines Halobutylkautschukes im Verschnitt mit bis zu 50 Gewichtsteilen eines weiteren Kautschukes enthält, als Weichmacher. Aufgrund der fehlenden Doppelbindungen im Molekül nimmt das Polyisobutylen an der Schwefelvemetzung nicht teil und liegt in der vulkanisierten Mischung als chemisch nicht angebundene Komponente vor. Obwohl das Polyisobutylen nicht angebunden ist, diffundiert es überraschenderweise nicht in nennenswertem Ausmaß aus dem schwefelvernetzten Vulkanisat heraus. Eine Versprödung des Vulkanisates tritt nicht ein und angrenzende Bauteile werden durch diffundierenden Weichmacher nicht beeinträchtigt. Die Druck- und Zugeigenschaften der Vulkanisate verbleiben auf gewünschtem Niveau.

Die erfindungsgemäßen Mischungen weisen zusatzlich den Vorteil auf, dass die Vulkanisate aus den Mischungen eine besonders hohe Ermüdungsrissbeständigkeit aufweisen.

Außerdem zeichnen sich die Vulkanisate aus den erfindungsgemäßen Mischungen durch eine verringerte Gasdurchlässigkeit aus. Bei Verwendung als Innerliner in Fahrzeugluftreifen werden so angrenzende Bauteile einer geringeren oxidativen Belastung und Alterung ausgesetzt und dei Reifendruck nimmt deutlich langsamer ab. Ggf. kann die Dicke des Innerliners reduziert werden.

Bei den in der Kautschukmischung eingesetzten Halobutylkautschuken kann es sich um Chlor- oder Brombutylkautschuk handeln, die als frisch produzierte Kautschuke, aber auch als Regenerat eingesetzt werden können. Eine besonders hohe Gasdichtigkeit der Vulkanisate kann erzielt werden, wenn die Mischung nur auf Halobutylkautschuk als Kautschuk basiert, also 100 Gewichtsteile Halobutylkautschuk und keinen weiteren Kautschuk aus der Gruppe der unter Punkt b) genannten Kautschuke enthalt.

Die erfindungsgemäße Kautschukmischung kann neben den Halobutylkautschuken auch noch bis zu 50 Gewichtsteile eines weiteren Kautschukes, ausgewählt aus der Gruppe, bestehend aus Butylkautschuk, Polybutadien, Styrol-Butadien-Copolymer, 3,4-Polyisopren, cis-1,4-Polysopren, Naturkautschuk, Styol-Isopren-Copolymer und Styrol-Isopren-Butadien-Terpolymer, enthalten.

Die eifindungsgemäße Kautschukmischung kann neben dem als Weichmacher wirkenden Polyisobutylen noch geringe Mengen an anderen Weichmachern, beispielsweise Mineralölweichmachern, enthalten. Besonders bevorzugt ist es allerdings, wenn die Mischung frei von Mineralölweichmachern ist. Auf diese Weise kann in vulkanisierten Produkten wie Reifen eine Schädigung umgebender Gummibauteile durch eindiffundierenden Mineralölweichmacher vermieden werden. Außerdem kann man somit auf die oftmals als ökologisch bedenklich eingestuften Mineralölweichmacher verzichten.

In der Kautschukmischung sind, bezogen auf 100 Gewichtsteile der Komponenten a) und b), 10 bis 120 Gewichtsteile Ruß enthalten. Bei dem Ruß kann es sich z. B. um Furnace-Ruße, Thermal-Ruße, Acetylen-Ruße, Channel-Ruße oder Lamp-Ruße handeln, die auch im Gemisch eingesetzt werden können. Für gute Gasdichtigkeit und einen nicht zu hohen Elastizitätsmodul weist die Mischung bevorzugt 30 bis 70 Gewichtsteile, bezogen auf 100 Gewichtsteile der Komponenten a) und b), auf.

Gemäß einer vorteilhaften Weiterbildung der Erfindung liegt das Gewichtsmittel-Molgewicht M_{w} des Polyisobutylens zwischen 450000 und 3000000 g/mol. Das Herausdiffundieren von Weichmacher kann so bei guten Vulkanisateigenschaften minimiert werden.

Neben den genannten Substanzen kann die erfindungsgemäße Kautschukmischung übliche Kautschukzuschlagstoffe in üblichen Mengen enthalten. Zu diesen Stoffen zählen z. B. Alterungsschutzmittel, Aktivatoren, wie z. B. Zinkoxid und Fettsäuren (z. B. Stearinsäure), Wachse, Harze, Kreide und Mastikationshilfsmittel. Neben Ruß können in der Mischung auch weitere Füllstoffe, wie Aluminiumoxide, Calciumcarbonat, Calciumhydroxid, Schichtsilikate, Kreide, Talk, Graphit, Kaolin, Magnesiumoxid, Magnesiumhydroxid, Kieselsäure, Zeolithe usw. in beliebigen Kombinationen enthalten sein.

Die Vulkanisation wird in Anwesenheit von Schwefel oder Schwefelspendern durchgerührt, wobei einige Schwefelspender zugleich als Vulkanisationsbeschleuniger wirken können. Schwefel oder Schwefelspender werden im letzten Mischungsschritt in den vom Fachmann bekannten Mengen der Kautschukmischung zugesetzt.

Des Weiteren kann die Kautschukmischung vulkanisationsbeeinflussende Substanzen, wie Vulkanisationsbeschleuniger, Vulkanisationsverzögerer und Vulkanisationsaktivatoren, in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. Benzothiazyldisulfid (MBTS), Sulfenamidbeschleuniger wie z. B. Benzothiazyl-2-cyclohexylsulfenamid (CBS), Guanidinbeschleuniger wie z. B. N,N`-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden.

Als vorteilhaft hat es sich erwiesen, wenn die Kautschukmischung mit einem Vernetzungsystem auf der auf der Basis von 0,1 - 7 Gewichtsteilen, bezogen auf 100 Gewichtsteile a) und b), Schwefel und 0,1 bis 6 Gewichtsteilen, bezogen auf 100 Gewichtsteile a) und b), zumindest eines Vulkanisationsbeschleunigers vulkanisiert wird.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Kalandervorgang, und in die entsprechende Form gebracht. Bevorzugt wird die Mischung in die Form eines Innerliners gebracht, der beim Reifenbau in der üblichen Art und Weise kalandriert und auf die Trommel aufgebracht wird. Der fertige Reifenrohling wird dann vulkanisiert.

Die Erfindung soll nun anhand von Vergleichs- und Ausführungsbeispielen, die in den Tabelle 1 zusammengefasst sind, näher erläutert werden.

Bei sämtlichen in Tabelle 1 enthaltenen Mischungsbeispielen sind die angegebenen Mengenangaben Gewichtsteile. Die Vergleichsmischungen sind mit V gekennzeichnet, die erfindungsgemäßen Mischungen sind mit E gekennzeichnet. In der Tabelle 1 wurden unterschiedliche Polyisobutylentypen eingesetzt.

Die Mischungsherstellung erfolgte unter üblichen Bedingungen in zwei Stufen in einem Labortangentialmischer. Die Umsatzzeiten bis zum Erreichen eines relativen Vernetzungsgrades von 90 % (t₉₀) wurden durch Verfolgung des Vulkanisationsprozesses über ein rotorloses Vulkameter gemäß DIN 53 529 ermittelt. Ferner sind die Mooney-Viskositäten der Mischungen gemäß DIN 53 523 mit einem Scherscheibenviskosimeter bei 100 °C bestimmt worden. Die Glasumwandlungstemperatur T_{G} wurde mittels DSC (Differential scanning calorimetry) bestimmt. Aus sämtlichen Mischungen wurden Prüfkörper durch 15 minütige Vulkanisation unter Druck bei 160 °C hergestellt und mit diesen Prüfkörpern für die Kautschukindustrie typische Materialeigenschaften bestimmt. Für die Tests an Prüfkörpern wurden folgende Testverfahren angewandt:
- Weichmacherextraktion mit Aceton in einem Extraktionsapparat nach Soxhlet über 16 h, vom Extrakt wird das Lösemittel verdampft und nach dem Erkalten der extrahierte Rest ausgewogen
- Zugfestigkeit bei Raumtemperatur gemäß DIN 53 504
- Reißdehnung bei Raumtemperatur gemäß DIN 53 504
- Spannungswerte bei 300 % Dehnung bei Raumtemperatur gemäß DIN 53 504
- Bruchenergiedichte bestimmt im Zugversuch nach DIN 53 504, wobei die Bruchenergiedichte die bis zum Bruch erforderliche Arbeit bezogen auf das Volumen der Probe ist
- Shore-A-Härte bei Raumtemperatur und 70 °C gemäß DIN 53 505
- Luftpermeabilität gemäß DIN 53 536 bei 70 °C Lufttemperatur .
- Monsanto Ermüdungstest (Fatigue to failure Tester) bei 136 % Dehnung und Raumtemperatur frischer und 3 Tage bei 100 °C in Luft gealterter Prüfkörper

**Tabelle 1**

| Bestandteile | Einheit | 1(V) | 2(V) | 3(V) | 4(E) | 5(E) | 6(E) |
|---|---|---|---|---|---|---|---|
| Brombutylkautschuk | Gew.-T. | 100 | 100 | 100 | 100 | 100 | 100 |
| Polyisobutylen (M_{w} 2600000) | Gew.-T. | - | - | - | 30 | - | - |
| Polyisobutylen (M_{w} 1100000) | Gew.-T. | - | - | - | - | 30 | - |
| Polyisobutylen (M_{w} 500000) | Gew.-T. | - | - | - | - | - | 30 |
| Ruß N 660 | Gew.-T. | 60 | 60 | 55 | 60 | 60 | 60 |
| Mineralölweichmacher | Gew.-T. | 14 | 0 | 0 | 0 | 0 | 0 |
| Stearinsäure | Gew.-T. | 2 | 2 | 2 | 2 | 2 | 2 |
| Zinkoxid | Gew.-T. | 4 | 4 | 4 | 4 | 4 | 4 |
| Beschleuniger | Gew.-T. | 1 2 | 1,2 | 1 2 | 1,2 | 1 2 | 1 2 |
| Schwefel | Gew.-T. | 0 5 | 0,5 | 0,5 | 0,5 | 0 5 | 0,5 |

| Eigenschaften | | | | | | | |
|---|---|---|---|---|---|---|---|
| t₉₀ | min | 8,1 | 79 | 79 | 80 | 8,2 | 80 |
| Mooney ML 1+4 | - | 54 | 80 | 74 | 76 | 74 | 68 |
| T_{G} | °C | -61 | -61 | -61 | -63 | -63 | -63 |
| Weichmacherextraktion | Gew.-% | 8,1 | 1,0 | 1,3 | 1,2 | 1,6 | 1,3 |
| Zugfestigkeit | MPa | 6,7 | 7,5 | 7,8 | 8,7 | 8,1 | 7,2 |
| Reißdehnung | % | 944 | 850 | 870 | 931 | 944 | 934 |
| Spannungswert 300 % | MPa | 2,33 | 3,8 | 3,43 | 2 64 | 2,49 | 2,32 |
| Härte bei RT | Shore A | 48,5 | 54,8 | 52 4 | 46,5 | 45,9 | 45,2 2 |
| Härte bei 70 °C | Shore A | 38,2 | 46,2 | 43,6 | 37,7 | 37,1 | 35,7 |
| Bruchenergiedichte | J/cm³ | 29,5 | 34 | 34,8 | 35,9 | 34,3 | 30,5 |
| Luftpermeabilität bei 70 °C | m²/Pa*s | 4,7*10⁻¹⁷ | 3,5*10⁻¹⁷ | 3,6*10⁻¹⁷ | 3,3*10⁻¹⁷ | 3,3*10⁻¹⁷ | 3,4*10⁻¹⁷ |
| Monsanto Ermüdung | kZyklen | 480 | 150 | 309 | > 2 Mio. | > 2 Mio. | > 2 Mio. |
| Mons Erm. nach Alterung | kZyklen | 93 | 21 | 59 | 1868 | 1056 | 912 |

Aus Tabelle 1 wird ersichtlich, dass die Vulkanisate der erfindungsgemäßen Kautschukmischungen eine sehr geringe Weichmacherextraktion und damit -diffusion aufweisen. Die Gefahr von Rissbildungen durch Verhärtung der Mischung nach dem Herausdiffundieren von Weichmacher wird somit verhindert. Auch die Beeinflussung angrenzender Bauteile durch Weichmacher, der von den erfindungsgemäßen Mischungen ausgeht, ist damit unterbunden. Die Druck- und Zugeigenschaften der Vulkanisate verbleiben dabei auf geignetem Niveau oder werden sogar verbessert. Auch die für Innerliner wichtige Anforderung einer Härte bei Raumtemperatur von weniger als 50 Shore A ist erfüllt.

Besonders bemerkenswert ist auch die deutliche Erhöhung der Ermüdungsrissbeständigkeit nach Monsanto beim Einsatz von Polyisobutylen in den Mischungen, die auch nach Wärmealterung besonders signifikant ist. Bei Verwendung als Innerliner gewährleisten diese Mischungen daher eine hohe Reifenhaltbarkeit.

Auch die Gasdurchlässigkeit ist im Vergleich zur Mischung 1 (V) reduziert, so dass Alterungseffekte im Produkt durch die verringerte Gasdiffusion reduziert werden.

## Patentansprüche

1. Schwefelvernetzbare Kautschukmischung, insbesondere für den Innerliner von Fahrzeugluftreifen, enthaltend
a) 50 - 100 Gewichtsteile zumindest eines Halobutylkautschukes,
b) bis maximal 50 Gewichtsteile zumindest eines weiteren Kautschukes, ausgewählt aus der Gruppe, bestehend aus Butylkautschuk, Polybutadien, Styrol-Butadien-Copolymer, 3,4-Polyisopren, cis-1,4-Polyisopren, Naturkautschuk, Styrol-Isopren-Copolymer und Styrol-Isopren-Butadien-Terpolymer, wobei sich die Gewichtsteile von a) und b) zu 100 addieren,
c) 5 - 45 Gewichtsteile, bezogen auf 100 Gewichtsteile a) und b), zumindest eines Polyisobutylens mit einem Gewichtsmittel-Molgewicht M_{w} von mehr als 400000 g/mol und
d) 10 - 120 Gewichtsteile, bezogen auf 100 Gewichtsteile a) und b), zumindest eines Rußes.

2. Kautschukmischung nach Anspruch 1, **dadurch gekennzeichnet, dass** sie 100 Gewichtsteile zumindest eines Halobutylkautschukes enthält.

3. Kautschukmischung nach Anspruch 1 oder 2, **dadurch gekennzeichnet, dass** sie frei von Mineralölweichmachern ist.

4. Kautschukmischung nach zumindest einem der Ansprüche 1 bis 3, **dadurch gekennzeichnet, dass** sie 30 - 70 Gewichtsteile, bezogen auf 100 Gewichtsteile a) und b), Ruß enthält.

5. Kautschukmischung nach zumindest einem der Ansprüche 1 bis 4, **dadurch gekennzeichnet, dass** das Gewichtsmittel-Molgewicht M_{w} des Polyisobutylens zwischen 450000 und 3000000 g/mol liegt.

6. Kautschukmischung nach zumindest einem der Ansprüche 1 bis 5, **dadurch gekennzeichnet, dass** sie mit einem Vernetzungssystem auf der Basis von 0,1 - 7 Gewichtsteilen, bezogen auf 100 Gewichtsteile a) und b), Schwefel und 0,1 bis 6 Gewichtsteilen, bezogen auf 100 Gewichtsteile a) und b), zumindest eines Vulkanisationsbeschleunigers vulkanisiert wird.

7. Fahrzeugluftreifen mit einem Innerliner, der auf einer Kautschukmischung nach einem der Ansprüche 1 bis 6 basiert.

## Claims

1. Sulfur-crosslinkable rubber mixture, in particular for the inner liner of pneumatic vehicle tires, containing
a) 50-100 parts by weight of at least one halobutyl rubber,
b) up to not more than 50 parts by weight of at least one further rubber selected from the group consisting of butyl rubber, polybutadiene, styrene-butadiene copolymer, 3,4-polyisoprene, cis-1,4-polyisoprene, natural rubber, styrene-isoprene copolymer and styrene-isoprene-butadiene terpolymer, the parts by weight of a) and b) summing to 100,
c) 5-45 parts by weight, based on 100 parts by weight of a) and b), of at least one polyisobutylene having a weight average molecular weight M_{w} of more than 400 000 g/mol and
d) 10-120 parts by weight, based on 100 parts by weight of a) and b), of at least one carbon black.

2. Rubber mixture according to Claim 1, **characterized in that** it contains 100 parts by weight of at least one halobutyl rubber.

3. Rubber mixture according to Claim 1 or 2, **characterized in that** it is free of mineral oil plasticizers.

4. Rubber mixture according to at least one of Claims 1 to 3, **characterized in that** it contains 30-70 parts by weight, based on 100 parts by weight of a) and b), of carbon black.

5. Rubber mixture according to at least one of Claims 1 to 4, **characterized in that** the weight average molecular weight M_{w} of the polyisobutylene is from 450 000 to 3 000 000 g/mol.

6. Rubber mixture according to at least one of Claims 1 to 5, **characterized in that** it is vulcanized with a crosslinking system based on 0.1-7 parts by weight, based on 100 parts by weight of a) and b), of sulfur and from 0.1 to 6 parts by weight, based on 100 parts by weight of a) and b), of at least one vulcanization accelerator.

7. Pneumatic vehicle tire comprising an inner liner which is based on a rubber mixture according to any of Claims 1 to 6.

## Revendications

1. Mélange de caoutchouc vulcanisable au soufre, destiné en particulier à la garniture intérieure d'un bandage de roue de véhicule et contenant :
a) de 50 à 100 parties en poids d'au moins un caoutchouc au butyle halogéné,
b) au plus 50 parties en poids d'au moins un autre caoutchouc sélectionné dans l'ensemble constitué du caoutchouc butyle, du polybutadiène, des copolymères de styrène et de butadiène, du poly(3,4-isoprène, du poly(cis-1,4-isoprène, di caoutchouc naturel, des copolymères de styrène et d'isoprène et des terpolymères de styrène, isoprène et butadiène, les parties en poids de a) et b) s'additionnant pour faire 100,
c) de 5 à 45 parties en poids par rapport aux 100 parties en poids de a) et b) d'au moins un polyisobutylène d'un poids moléculaire moyen en poids M_{w} de plus de 400 000 g/mole et
d) de 10 à 120 parties en poids par rapport aux 100 parties en poids de a) et b) d'au moins un noir de carbone.

2. Mélange de caoutchouc selon la revendication 1, **caractérisé en ce qu'**il contient 100 parties en poids d'au moins un caoutchouc au butyle halogéné.

3. Mélange de caoutchouc selon les revendications 1 ou 2, **caractérisé en ce qu'**il ne présente pas de plastifiants à base d'huile minérale.

4. Mélange de caoutchouc selon au moins l'une des revendications 1 à 3, **caractérisé en ce qu'**il contient de 30 à 70 parties en poids de noir de carbone poids par rapport aux 100 parties en poids de a) et b).

5. Mélange de caoutchouc selon au moins l'une des revendications 1 à 4, **caractérisé en ce que** le poids moléculaire moyen en poids M_{w} du polyisobutylène est compris entre 450 000 et 3 000 000 g/mole.

6. Mélange de caoutchouc selon au moins l'une des revendications 1 à 5, **caractérisé en ce qu'**il est vulcanisé à l'aide d'un système de réticulation à base de 0,1 à 7 parties en poids de soufre par rapport aux 100 parties en poids de a) et b) et de 0,1 à 6 parties en poids d'au moins un accélérateur de vulcanisation par rapport aux 100 parties en poids de a) et b).

7. Bandage de roue de véhicule basé sur un mélange de caoutchouc selon l'une des revendications 1 à 6.
